# EUROPÄISCHE PATENTSCHRIFT

(11) **EP 0 633 468 B1**
(45) Veröffentlichungstag und Bekanntmachung des Hinweises auf die Patenterteilung: **25.08.1999**
(21) Anmeldenummer: 94108169.7
(22) Anmeldetag: 27.05.1994
(51) Int. Cl.: G01N 27/414, G01N 27/403

(54) **Mikrokapillare mit integrierten chemischen Mikrosensoren und Verfahren zu ihrer Herstellung**
Microcapillary with inbuilt chemical microsensors and method for its manufacture
Microcapillaire avec des microcapteurs chimiques intégrés et procédé pour sa fabrication

(30) Priorität: 03.06.1993 DE 4318407
(43) Veröffentlichungstag der Anmeldung: 11.01.1995
(73) Patentinhaber: Forschungszentrum Rossendorf e.V., D-01474 Rossendorf (DE)
(72) Erfinder: Howitz, Steffen, Dr., D-01309 Dresden (DE); Pham, Minh Tan, Dr., D-01324 Dresden (DE); Fiehn, Hendrik, D-01097 Dresden (DE)

(56) Entgegenhaltungen:
- EP-A- 0 157 597
- DE-A- 2 646 236
- GB-A- 2 236 903
- US-A- 5 132 012
- SENSORS AND ACTUATORS B (CHEMICAL), MAY 1992, SWITZERLAND, Bd. B8, Nr. 2, ISSN 0925-4005, Seiten 205-208, XP000286957 SHOJI S ET AL: "Micro flow cell for blood gas analysis realizing very small sample volume"

## Beschreibung

Die Erfindung betrifft eine Mikrokapillare mit integrierten chemischen Mikrosensoren und ein Verfahren zu ihrer Herstellung.

Bisher sind zwei mikrotechnisch hergestellte Kapillarsysteme für die Integration mehrerer chemischer Mikrosensoren auf der Basis von ISFETs bekannt geworden.
Die von H.H. Vlekkert, et al in [ Multi-Ion Sensing System Based on Glass-encapsulated pH-ISFETs and a Pseudo-REFET; Sensors and Actuators; B1 (1990)pp. 395-400 ] vorgestellte Multi-Ionen-Meßzelle besteht aus einer gläsernen Mikrokapillare. Diese wurde durch Stapeln zweier Glassubstrate aufgebaut, wovon eines einen kleinen Graben - die spätere Mikrokapillare besitzt und das zweite Löcher senkrecht auf die o.g. Kapillare beinhaltet, die den Zugang der Meßlösung an die empfindlichen Membrangebiete von aufgesetzten Mikrosensoren sichern sollen. Das Aufsetzen der ISFET-Mikosensoren auf das gelochte Glassubstrat erfolgt mittels anodischen Bondens. Auf diese Weise entstehen Sacklochverbindungen zwischen der Mikrokapillare und den empfindlichen Membrangebieten der ISFETs. Die Länge jedes der Sacklöcher beträgt 200µm. Diese Verfahrensweise beinhaltet drei sehr wesentliche Probleme. Das erste Problem resultiert aus der Art der Fluidankopplung über die Sacklöcher. Soll der integrierte chemische Mikrosensor einen Konzentrationssprung des in der Mikrokapillare strömenden Meßfluides erfassen, bedarf es zunächst einer Diffusionszeit für den Austausch des Fluides im Sackloch, dieser Vorgang benötigt Zeit und verzögert die Ansprechgeschwindigkeit und das Auflösungsvermögen der Meßanordnung. Ein zweites Problem ersteht daraus, daß alle in der Mikrokapillare entstehenden bzw. in diese einströmenden Gasbläschen in den Sacklöchern gesammelt und festgehalten werden. Dieser Umstand führt zu Fehlbenetzungen der empfindlichen Sensormembran und kann bis zum zeitlich befristeten Ausfall des Bauelementes eskalieren. Das dritte Problem besteht in der hohen elektrostatischen und thermischen Belastung der CMOS- Sensorbauelemente beim Montageprozeß des Mikrosensors in die Mikrozelle. Das zweite Realisierungsbeispiel von v.d.Schoot et al. [ A Modular Miniaturized Chemical Analysis System; Tech. Digest of the 4th. Int. Meet. Chemical Sensors; Tokyo; 13.-17. Sept. 19-92; pp. 394-397 ] nutzt ein fotopolymerisierbares Polymer zur Ausbildung einer Fließkapillare direkt auf einem Siliciumsubstrat mit monolitisch integrierten ISFETs. In diesem Beispiel sind Mikrokapillare und Sensorarray ein abgeschlossenes Bauelement, Sacklöcher treten hier nicht auf, Ausfälle eines Sensors ziehen jedoch das Auswechseln der Gesamtanordnung nach sich.

Die Aufgabe der in den Ansprüchen dargestellten Erfindung ist es, die o.g. Probleme bei der Herstellung und dem Betrieb von entsprechenden Meßsystemen zu beseitigen.
Mit der Erfindung wird die Mikrokapillare so konfiguriert, daß die in die Mikrokapillare integrierten chemischen Mikrosensoren, d.h. deren empfindliche Membrangebiete von dem zu analysierenden Meßfluid zwangsumspült und damit zwangsbenetzt werden. Diese Zwangsumspülung der Mikrosensoren innerhalb der Öffnungen wird konstruktiv durch Einführung sogenannter Kanalstopper realisiert, welche die Entstehung von Totvolumina minimieren.
Die erfindungsgemäße Mikrokapillare mit integrierten chemischen Mikrosensoren bietet dabei den Vorteil, daß unter Verwendung der Kanalstopper das Meßfluid auf optimale Weise zum Auftreffen auf das sensitive Gebiet des Sensors geführt wird, wodurch ein verbessertes Ansprechen im dynamischen Betrieb erreicht wird. Das erfindungsgemäße Verfahren bietet eine schonende Montage von Mikrosensoren unter Vermeidung hoher Temperatur- oder Spannungsbelastungen und gestattet darüberhinaus ein flexibles Auswechseln von Ausfallsensoren.

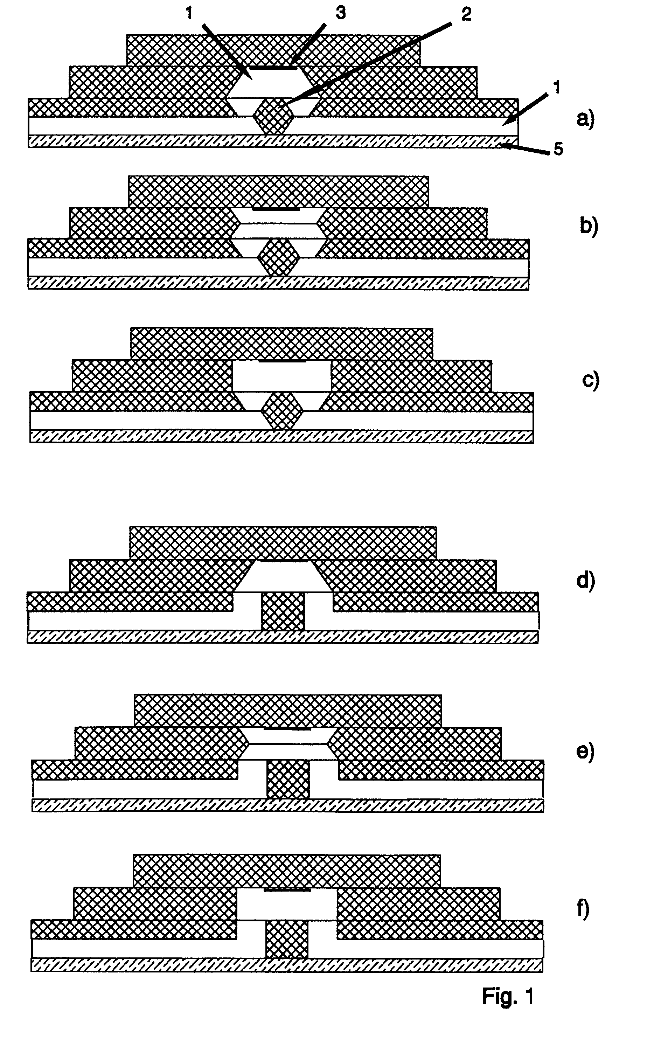

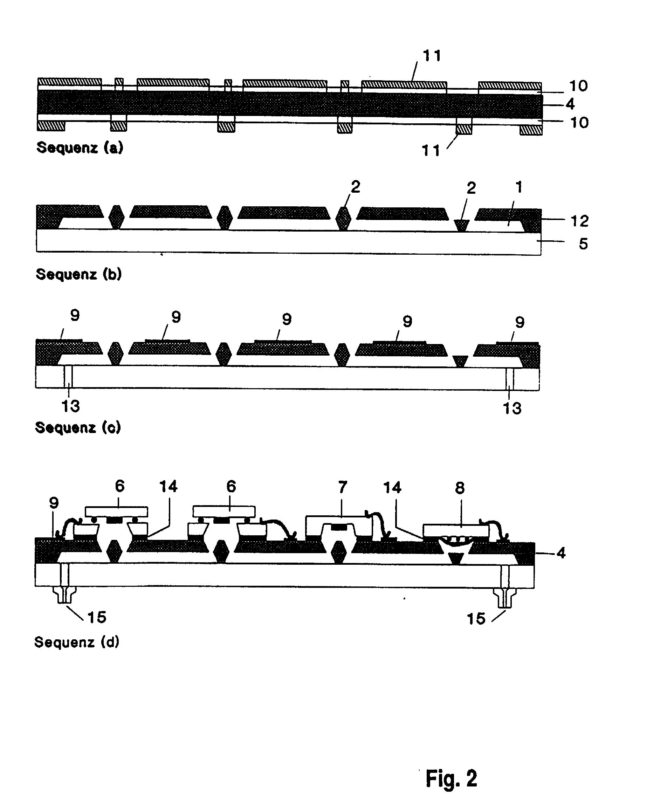

Figur 1 zeigt unterschiedliche Ausführungen der Mikrokapillare nach Anspruch 1 und Figur 2 ist eine sequentielle Darstellung der Verfahrensschritte zur Herstellung der Mikrokapillare.
Die zum Aufbau der Mikrokapillare genutzte anisotrope Silicium-Strukturierungstechnologie kann darüber hinaus sichern, daß je nach Anwendungsfall die geometrisch ideale Gestaltung des Ortes Mikrokapillare (1) - Kanalstopper ( 2 )- Membrangebiet ( 3 ) herstellbar wird, wie dies in Fig. 1 a) bis f) beispielhaft dargestellt ist. Die dreidimensionale geometrische Reproduzierbarkeit der Mikrokapillare wird allein durch die lateralen Toleranzen der mikroelektronischen Technologie zur Fotolitografie begrenzt, diese liegt bei + 3 µm.
Die erfindungsgemäß aufgebaute, mit der Glasscheibe ( 5 ) abgedichtete Mikrokapillare ( 1) gestattet die Integration chemischer Mikrosensoren mit differenzierter konstruktiver und stofflicher Gestaltung. Das in Fig.2, Sequenz (d) dargestellte Ausführungsbeispiel zeigt die Integration von so unterschiedlichen chemischen Mikrosensoren wie dem Vorderseitenmembran-ISFET ( 6 ), dem Rückseitenmembran-ISFET ( 7 ) und der Mikroelektrode mit bioaktiver Membran ( 8 ). Neben den fluidtechnischen Funktionen der Mikrokapillare erfüllt die Gesamtanordnung auch elektronische Aufgaben. Der die Mikrokapillare enthaltende Wafer ( 4 ) trägt auf seiner isolierten Siliciumoberseite das Leiterzugnetzwerk ( 9 ) für die elektronische Verbindung zwischen den chemischen Mikrosensoren und die informationstechnische Peripherie.

Die beispielhafte Herstellung einer erfindungsgemäßen Kapillare mit integrierten chemischen Mikrosensoren wird an Hand der sequentiellen Darstellung in Fig.3 verdeutlicht.

### Sequenz(a):

Ausgangsobjekt für die Realisierung der Mikrokapillare ist ein beidseitig oxydierter (100)-Siliciumwafer ( 4 ) mit 1,3µm SiO₂-Deckschichten ( 10 ). An diesem Wafer, dem späteren Formstück der Mikrokapillare wird zunächst ein Doppelseitenlithografieprozeß zur Herstellung der Ätzmasken ( 11 ) durchgeführt und beide SiO₂-Deckschichten ( 10 ) werden strukturiert. Die SiO₂-Deckschichten ( 10 ) ihrerseits dienen dann als Ätzmaske während der anisotropen Strukturierung des Siliciumwafers ( 4 ).

### Sequenz(b):

Im Siliciumwafer ( 4 ) wird in wässriger, alkalischer KOH/30%/80°C Ätzlösung die Mikrokapillare ( 1 ) mit den Kanalstoppern ( 2 ) anisotrop strukturiert und anschließend der strukturierte Wafer ( 2 ) an seiner Rückseite mit einem Pyrex 7740-Glassubstrat ( 5 ) von 130µm Dicke durch anodisches Bonden im Interfacebereich ( 12 ) zur abgedichteten Mikrokapillare verbunden.

### Sequenz(c):

Die definierte Öffnung der Fluidein- bzw. Fluidauslässe ( 13 ) im Pyrex-Glassubstrat ( 5 ) erfolgt durch hydrolytisches Ätzen in einem alkalischen Bad bei Raumtemperatur und 30...40V Gleichspannung. Nach der Reinigung erfolgt die Abscheidung einer 1µm dicken Leitbahnmetallisierung ( 9 ) aus Aluminium, diese Metallisierung wird fotolithografisch strukturiert.

### Sequenz(d):

Durch Reflowlöten oder Kleben ( 14 ) werden nun die Arrays chemischer Mikrosensoren und die Fluidanschlüsse ( 15 ) schonend in die Mikrokapillare montiert.

## Patentansprüche

1. Mikrokapillare (1) mit integrierten chemischen Mikrosensoren, bestehend aus einer in einem Wafer (4) mikrotechnisch strukturierten, ggfs. verzweigten oder gewendelten Kapillare (1) mit zusätzlichen, eine Verbindung zu den chemisch sensitiven Gebieten der Mikrosensoren herstellenden Öffnungen, dadurch gekennzeichnet, daß im Bereich dieser Öffnungen innerhalb der Kapillare (1) Kanalstopper (2) angeordnet sind, die in Form einer Strömungsumleitung eine Zwangsspülung der Mikrosensoren innerhalb der Öffnungen verursachen.

2. Verfahren zur Herstellung einer Mikrokapillare (1) nach Anspruch 1, dadurch gekennzeichnet, daß in einem Siliziumwafer (4) durch einen zweiseitigen Strukturierungsprozeß der die spätere Kapillare (1) bildende Kanal einschließlich der Verbindungsöffnungen und der im Kanal stehenbleibenden Kanalstopper (2) ausgebildet werden, daß anschließend die den Mikrokanal tragende Seite des Wafers (4) mit einer Glasscheibe abgedeckt und die an die gegenüberliegende Oberfläche tretenden Öffnungen mit den Mikrosensoren abgedeckelt werden.

3. Verfahren zur Herstellung einer Mikrokapillare (1) nach Anspruch 2, dadurch gekennzeichnet, daß die Montage der Mikrosensoren auf dem strukturierten Wafer (4) durch Reflowlöten mittels niedrig schmelzender Lote oder kaltaushärtender Klebstoffe erfolgt.

## Claims

1. Micro-capillary (1) with integrated chemical micro-sensors, consisting of a micro-technically structured, optionally branched or coiled capillary (1) in a wafer (4) with, in addition, openings forming a connection to the chemical sensitive areas of the micro-sensors, characterised in that in the area of these openings within the capillary (1) channel stoppers (2) are provided, which cause a forced irrigation of the micro-sensors within the openings in form of a flow diversion.

2. Method for the manufacture of a micro-capillary (1) in accordance with Claim 1, characterised in that the channel later forming the capillary (1) including the connection-openings and the channel-stoppers (2) remaining in the channel are formed in a silicon-wafer (4) by a bilateral structuring-process and that the side of the wafer (4) carrying the microchannel is subsequently covered with a glass-disk and the openings appearing on the opposite surface are covered with the micro-sensors.

3. Method for the manufacture of a micro-capillary (1) in accordance with Claim 2, characterised in that the installation of the micro-sensors on the structured wafer (4) is effected by reflow soldering using low melting solders or cold-setting adhesive.

## Revendications

1. Microcapillaire (1) à microcapteurs chimiques intégrés, composé d'une tranche de silicium (4) à structure microtechnique, le cas échéant le capillaire (1) ramifié ou spiralé comporte en supplément une liaison avec les ouvertures réalisées pour atteindre les zones chimiques sensibles des microcapteurs, le système est caractérisé par le fait que dans la zone de ces ouvertures, au sein du capillaire (1), des pions bloqueurs (2) ont été placés permettant de dériver le flux interne afin de réaliser un nettoyage forcé des microcapteurs à l'intérieur des ouvertures.

2. Méthode de fabrication d'un microcapillaire (1) conforme à la description 1., caractérisée par un processus double face de mise en forme d'une tranche de silicium (4) afin d'obtenir la formation ultérieure du canal de capillaire (1), des ouvertures de liaison et des pions bloqueurs de canal (2); méthode qui permet ensuite de refermer par une plaque de verre la face de la tranche de silicium (4) comportant le canal et sur la face opposée les ouvertures destinées aux microcapteurs.

3. Méthode de fabrication d'un microcapillaire (1) conforme à la description 2., caractérisée par un processus de montage des microcapteurs sur la tranche de silicium (4) réalisé par brasage par fusion au moyen de métaux d'apport à faible température de fusion, ou par colles spéciales à froid.
